# EUROPÄISCHE PATENTANMELDUNG

(11) **EP 1 553 321 A1**
(43) Veröffentlichungstag der Anmeldung: **13.07.2005**
(21) Anmeldenummer: 05000144.5
(22) Anmeldetag: 05.01.2005
(51) Int. Cl.: F16D 55/228, F16D 65/14

(54) **Bremszange und Verfahren zur Herstellung eines Gehäuses einer Bremszange**

(30) Priorität: 09.01.2004 DE 102004001495
(71) Anmelder: GUSTAV MAGENWIRTH GmbH & Co. KG, D-72574 Bad Urach (DE)
(72) Erfinder: Ruopp, Michael, 89180 Berghülen (DE)
(74) Vertreter: Friese, Martin

(57) **Zusammenfassung**

Die Erfindung betrifft eine Bremszange für eine Scheibenbremse, insbesondere für Motorräder und/oder Fahrräder, mit einem Gehäuse (30), in dem ein Scheibenraum (39) zur Aufnahme einer Bremsscheibe und ein Bremszylinder (35) zur Aufnahme eines Bremskolbens (25) ausgebildet ist, der mit dem Scheibenraum (39) in Verbindung steht und an seiner dem Scheibenraum (39) gegenüberliegenden Seite eine Montageöffnung (50) aufweist, durch die der Bremskolben (25) in den Bremszylinder (35) einsetzbar ist, einem Verschlußelement (10) zum Verschließen der Montageöffnung (50) nach dem Einsetzen des Bremskolbens (25) in den Bremszylinder (35) und einem Sicherungselement (21) zum Sichern des Verschlußelements (10) in der Montageöffnung (50) gegenüber Kräften in Richtung der Hauptachse des Bremszylinders (35).

Der Erfindung liegt die Aufgabe zugrunde, eine Bremszange anzugeben, bei der das Verschlußelement leicht und einfach montierbar ist.

Zur Lösung der Aufgabe schließen bei der erfindungsgemäßen Bremszange das Gehäuse (30) und das Verschlußelement (10) das Sicherungselement (21) ein.

## Beschreibung

Die vorliegende Erfindung betrifft eine Bremszange gemäß dem Oberbegriff von Anspruch 1 bzw. 13 und ein Verfahren zur Herstellung eines Gehäuses einer Bremszange gemäß dem Oberbegriff von Anspruch 15.

Bei bekannten Bremszangen ist zumindest ein Bremszylinder in dem Gehäuse zur Aufnahme eines Bremskolbens ausgebildet. Üblicherweise werden die Bremszylinder durch spanende Bearbeitung ausgebildet. Meistens werden in einem Arbeitsgang zwei Bremszylinder ausgebildet, die auf gegenüberliegenden Seiten eines Scheibenraums zur Aufnahme von Bremsbelägen und einer Bremsscheibe liegen. Derartige Bremszangen und deren Funktion sind dem Fachmann bekannt. Wegen der Herstellungsweise ist zumindest einer der Bremszylinder eines Bremszylinderpaars derart ausgebildet, daß eine durchgehende Bohrung vom Scheibenraum durch das Gehäuse nach außen ausgebildet wird. Beim Zusammenbau der Bremszange werden die Bremskolben durch diesen offenen Bremszylinder von außen in die Bremszange eingesetzt, und die Montageöffnung wird durch ein Verschlußelement verschlossen. Üblicherweise ist die Montageöffnung, d.h. das Ende des offenen Bremszylinders, mit einem Innengewinde ausgebildet, und das Verschlußelement mit einem Außengewinde ausgebildet. Zum Verschließen des offenen Bremszylinders wird das Verschlußelement mit einem entsprechenden Werkzeug in die Montageöffnung geschraubt.

Eine derartige bekannte Bremszange wird beispielsweise in dem Artikel "Intensiv-Test, Yamaha XJR 1300, Zeitschrift Motorradfahrer, Heft November 2003, Seiten 28 bis 30 gezeigt.

Die deutsche Offenlegungsschrift DE 22 163 162 A zeigt einen gegossenen Bremssattel, bei dem die offene Seite der Bohrung, in der die Bremskolben aufgenommen werden, mit einem Verschlußstopfen verschlossen ist, der von innen in die Bohrung eingesetzt wird. Das hat den Nachteil, daß die Montage sehr kompliziert ist, insbesondere weil zumindest ein Kolben erst nach dem Einsetzen des Verschlussstopfens eingesetzt werden kann.

Die deutsche Offenlegungsschrift DE 25 57 700 A1 zeigt einen gegossenen Bremssattel, bei dem die offene Seite der Bohrung mit einer Abschlußscheibe verschlossen ist. Ein Sicherungsring verhindert ein Herausfallen der Abschlußscheibe nach außen. Der Sicherungsring ist von außen zugänglich und kann entfernt werden, um die Abschlußscheibe zum Ausbau freizugeben. Das hat den Nachteil, daß die Bremszange von dem Fahrer versehentlich bei der Reparatur oder Wartung des Fahrzeugs geöffnet werden kann.

Die europäische Offenlegungsschrift EP 1 256 740 A1 zeigt eine Bremszange, bei der die offene Seite der Bohrung mit einem Verschlußelement verschlossen ist. Zur Sicherung des Verschlußlelements wird entweder das Gehäuse oder das Verschlußelement nach dem Einsetzen des Verschlußelements umgeformt. Das hat den Nachteil, daß die Montage sehr aufwendig und schwierig ist.

Die bekannten Bremszangen haben den Nachteil, daß die Montage des Verschlußelementes aufwendig ist. Außerdem besteht bei einigen bekannten Bremszangen der Nachteil, daß die Bremszange von dem Fahrer versehentlich bei der Reparatur oder Wartung des Fahrzeugs geöffnet wird bzw. sich im Betrieb infolge der Belastungen durch die Druckwechsel im System öffnet.

Der Erfindung liegt daher die Aufgabe zugrunde, eine Bremszange anzugeben, bei der das Verschlußelement leicht und einfach von außen montierbar ist.

Der Erfindung liegt auch die Aufgabe zugrunde, eine Bremszange anzugeben, bei der das Verschlußelement nicht versehentlich bzw. vorzugsweise nicht entfernt werden kann.

Die Aufgabe der Erfindung wird mit einer Bremszange gemäß den Merkmalen von Anspruch 1 gelöst. Vorteilhafte Ausgestaltungen der Erfindung sind den abhängigen Ansprüchen angegeben.

Erfindungsgemäß umfaßt die Bremszange für eine Scheibenbremse, insbesondere für Motorräder und/oder Fahrräder, ein Gehäuse, in dem ein Scheibenraum zur Aufnahme einer Bremsscheibe und ein Bremszylinder zur Aufnahme eines Bremskolbens ausgebildet ist, der mit dem Scheibenraum in Verbindung steht und an seiner dem Scheibenraum gegenüberliegenden Seite eine Montageöffnung aufweist, durch die der Bremskolben in den Bremszylinder einsetzbar ist, ein Verschlußelement zum Verschließen der Montageöffnung nach dem Einsetzen des Bremskolbens in den Bremszylinder, und ein Sicherungselement zum Sichern des Verschlußelements in der Montageöffnung gegenüber Kräften in Richtung der Hauptachse des Bremszylinders, wobei das Gehäuse und das Verschlußelement das Sicherungselement einschließen.

Diese Bremszange hat den Vorteil, daß die Montage des Verschlußelements gegenüber dem Stand der Technik wesentlich vereinfacht und damit kostengünstiger ist, weil kein Eindrehen und keine Drehmonentüberwachung beim Eindrehen des Verschlußelements notwendig ist. Außerdem besteht der Vorteil, daß sich das Verschlußelement nicht mehr infolge der Belastungen durch die Druckwechsel im System selber lösen kann. Ein weiterer Vorteil besteht darin, daß das Verschlußelement nicht mehr entfernt und die Bremszange nicht versehentlich beschädigt werden kann.

Gemäß einer bevorzugten Ausführung der Erfindung ist das Sicherungselement ein Sprengring. Durch diese Ausführung läßt sich ein besonders einfacher Aufbau erreichen. Die Montage ist ebenfalls sehr einfach, weil der Sprengring zur Sicherung des Verschlußelements nur an seinen Platz springen muß.

Vorzugsweise ist in der Montageöffnung eine Nut zur Aufnahme des Sicherungselements vorgesehen ist. Entsprechend kann das Verschlußelement eine Nut zur Aufnahme des Sicherungselements aufweisen.

Gemäß einer Ausführung der Erfindung ist in dem Gehäuse im Bereich der Montageöffnung eine Schulter zur Abstützung des Verschlußelements vorgesehen ist. Dabei kann zwischen der Schulter und dem Verschlußelement eine Dichtung vorgesehen werden. Auf diese Weise läßt sich die Abdichtung des Druckraums des Bremszylinders auf einfache und sichere Weise realisieren.

Gemäß einer Ausführung der Erfindung ist auf der der Montageöffnung gegenüberliegenden Seite des Scheibenraums ein weiterer Bremszylinder zur Aufnahme eines weiteren Bremskolbens vorgesehen, der zu dem anderen Bremszylinder koaxial angeordnet ist. Vorzugweise werden bei der Montage alle Bremskolben (und Dichtungen) durch die Montageöffnung eingesetzt, bevor die Montageöffnung durch das Verschlußelement verschlossen wird.

Aus Sicherheitsgründen ist es vorteilhaft, wenn das Verschlußelement und das Sicherungselement nach der Montage des Verschlußelements in dem Gehäuse nicht mehr entfernbar ist.

Gemäß einer bevorzugten Ausführung der Erfindung ist ein weiterer Bremszylinder zur Aufnahme eines weiteren Bremskolben vorgesehen, der neben dem anderen Bremszylinder angeordnet ist, wobei ein Verschlußelement und ein Sicherungselement gemäß der Erfindung vorgesehen ist.

Vorzugsweise weist die erfindungsgemäße Bremszange mehrere Paare, insbesondere vorzugsweise zwei Paare von Bremszylindern auf, wobei auf einer Seite der Bremszange für jedes Bremszylinderpaar jeweils ein Verschlußelement und Sicherungselement gemäß der Erfindung vorgesehen ist.

Vorteilhafterweise ist das Gehäuse der erfindungsgemäßen Bremszange ein Schmiedeteil. Das hat gegenüber Gehäusen aus Guß- oder Frästeilen den Vorteil, daß die Bremszange bei gleicher Festigkeit kleiner ausgebildet werden kann. Insbesondere kann eine hinreichende Festigkeit im Bereich der Montageöffnung zur Aufnahme des Sicherungselements (Sprengring) erzielt werden, um die beim Bremsen auftretenden Kräfte aufzunehmen.

Die WO 02/064991 A1 zeigt einen spanlos geformten Bremsattel mit einem Schacht für die Aufnahme der Bremsbeläge, der ein Guß- oder Schmiedeteil ist. Gehäuse für Bremszangen mit mindestens zwei Schächten für die Aufnahme der Bremsbeläge sind hingegen üblicherweise Guß- oder Frästeile. Es ist dem Fachmann nicht bekannt, daß Gehäuse für Bremszangen von Scheibenbremsen mit mindestens zwei Schächten für die Aufnahme der Bremsbeläge als Schmiedeteil ausgebildet werden können. Insbesondere bei Gehäusen mit mindestens zwei Schächten für die Aufnahme der Bremsbeläge wird der Fachmann davon ausgehen, daß eine Nachbearbeitung der Schächte zur Ausbildung der Anlageflächen für die Bremsbeläge erforderlich ist, weil das Gehäuse aus den Schmiedewerkzeugen derart entformt werden muß, daß die Schmiedewerkzeuge gleichzeitig aus beiden Schächten in einer Richtung herausgezogen werden, wobei aber die Anlageflächen für die Bremsbeläge in den beiden Schächten verschieden orientiert sind, um eine optimale Anlage zu bewirken. Verfahrensbedingt sind beim Schmieden Ausbildungen von Hinterschneidungen nicht möglich, weil dann die Schmiedewerkzeuge zum Entformen des Gehäuses nicht mehr entfernt werden können. Um ein Gehäuse für eine Bremszange mit mindestens zwei Schächten als Schmiedeteil herzustellen, ist daher eine spanende Nachbearbeitung der Schächte zur Schaffung der optimalen Anlageflächen erforderlich. Das hat den Nachteil, daß die Herstellung sehr aufwendig und teuer ist. Außerdem verschlechtert sich die Härte und Oberflächengüte der nachbearbeiteten Anlageflächen.

Der Erfindung liegt daher auch die Aufgabe zugrunde, ein Verfahren zur Herstellung eines Gehäuses für eine Bremszange als Schmiedeteil anzugeben, das einfach und kostengünstig ist.

Diese Aufgabe der Erfindung wird mit einer Bremszange gemäß Anspruch 13 bzw. einem Verfahren gemäß den Merkmalen von Anspruch 15 oder 16 gelöst. Vorteilhafte Ausgestaltungen der Erfindung sind in den abhängigen Ansprüchen angegeben.

Erfindungsgemäß weist das Verfahren zur Herstellung eines Gehäuses einer Bremszange für eine Scheibenbremse, insbesondere für Motorräder und/oder Fahrräder, mit mehreren Schächten zur Aufnahme von Bremsbelägen, die jeweils zumindest eine Anlagefläche umfassen, an der die Bremsbeläge beim Bremsen des Fahrzeugs zur Aufnahme von Bremskräften anliegen, folgende Schritte auf:
a) Ausbilden eines Schmiedewerkzeugpaares, derart, daß die Konturen der beiden Schmiedewerkzeuge die Konturen des herzustellendes Gehäuses definieren, und die beiden Schmiedewerkzeuge Trennböden in den Schächten definieren, in denen beim Schmieden Überschußmaterial verbleibt,
b) Einbringen von Material in das erste Schmiedewerkzeug,
c) Schmieden des Materials mit den Schmiedewerkzeugpaar, und
d) Entformen des Gehäuses durch Entfernen des Schmiedewerkzeugpaar,
e) Entfernen des Überschußmaterials der Trennböden,
wobei die Trennböden in den Schächten schräg zu der Abzugsrichtung zumindest eines der Schmiedewerkzeuge liegen.

Man könnte auch sagen, daß erfindungsgemäß die Trennböden in den Schächten gegenüber der Ebene geneigt sind, die durch einen Normalen-Vektor definiert ist, dessen Richtung der entspricht Abzugsrichtung zumindest eines der Schmiedewerkzeuge.

Durch die Schrägstellung der Trennböden, wird es möglich, die Anlageflächen in den gewünschten optimalen Ausrichtungen in einem Schmiedevorgang auszubilden, ohne Hinterschneidungen zu bewirken. Daher kann ein einteiliges Gehäuse mit mehreren Schächten hergestellt werden.

Erfindungsgemäß können die Trennböden auch krummlinig ausgebildet sein, solange keine Hinterschneidungen gebildet werden, die das Abziehen der Schmiedewerkzeuge verhindern würden.

Gemäß einer Ausführung des erfindungsgemäßen Verfahrens werden die Trennböden vorteilhafterweise außerhalb der Anlageflächen für die Bremsbeläge ausgebildet. Daher entstehen an den Anlageflächen durch das Entfernen der Trennböden keine Grate, wodurch sich der Vorteil ergibt, daß die Bremsbeläge beim Bremsen an einer geschmiedeten, gratfreien und nicht nachbearbeiteten Anlagefläche anliegen. Insofern können sich die Bremsbeläge bei der Betätigung der Bremse leicht in der Achsrichtung (beim Bremsen in Richtung Bremsscheibe und beim Lösen der Bremse von der Bremsscheibe weg) bewegen. Störende Grate müssen nicht entfernt werden, weil die Trennböden außerhalb der Anlageflächen liegen. Besonders wichtig ist dieses Merkmal für die beim Bremsen des vorwärts fahrenden Fahrzeugs wichtig, weil dabei hohe Belastungen auftreten.

Vorzugsweise sind die Trennebenen in den Schächten in einem Winkel von 1 - 45°, vorzugsweise 5 bis 40°, insbesondere vorzugsweise 10 bis 39°, insbesondere vorzugsweise 20 bis 38°, insbesondere vorzugsweise 30 bis 37°, und insbesondere vorzugsweise ungefähr 36° gegenüber einer Ebene geneigt, die durch einen Normalen-Vektor definiert ist, dessen Richtung der Abzugsrichtung zumindest eines der Schmiedewerkzeuge entspricht.

Gemäß einer bevorzugten Ausführung der Erfindung weist das Gehäuse zwei Schächte auf. Dabei sind die Trennebenen vorzugsweise spiegelsymmetrisch angeordnet.

Gemäß einer Ausführung der Erfindung werden in dem Gehäuse nach Schritt d) und vor Schritt e) oder nach Schritt e) Bremszylinder oder Bremszylinderpaare zur Aufnahme von Bremskolben vorzugsweise durch Drehen, Fräsen oder Bohren ausgebildet werden. Die erste Alternative hat den Vorteil, daß ein Teil der Trennböden bereits bei diesem Bearbeitungsschritt entfernt wird. Dadurch erleichtert sich der nachfolgende Schritt e).

Besonders vorteilhaft ist die Kombination, die erfindungsgemäße Bremszange mit einem Gehäuse auszubilden, daß nach einem erfindungsgemäßen Verfahren ausgebildet ist.

Im folgenden wird die erfindungsgemäße Bremszange und das erfindungsgemäße Verfahren anhand der Figuren gezeigten Ausführungsbeispiels der Erfindung genauer beschrieben.
- Fig. 1: zeigt einen Schnitt durch die erfindungsgemäße Bremszange entlang der Linie I-I von Fig. 5,
- Fig. 2: zeigt einen Schnitt durch das Verschlußelement der Bremszange von Fig. 1,
- Fig. 3: zeigt eine Seitenansicht des Verschlußelements von Fig. 1,
- Fig. 4: zeigt eine Seitenansicht der erfindungsgemäßen Bremszange von Fig. 1,
- Fig. 5: zeigt eine Ansicht der erfindungsgemäßen Bremszange von vorne,
- Fig. 6: zeigte eine Ansicht der erfindungsgemäßen Bremszange von oben,
- Fig. 7: zeigt einen Schnitt durch die erfindungsgemäße Bremszange von Fig. 1 entlang der Linie VII-VII von Fig. 6, wobei die Lage der beim Schmieden entstehenden Trennböden in den beiden Schächten angedeutet ist,
- Fig. 8: zeigt eine schematische Seitenansicht des Gehäuses für eine Bremszange entsprechend Fig. 7 vor der Ausbildung der Bremszylinder.

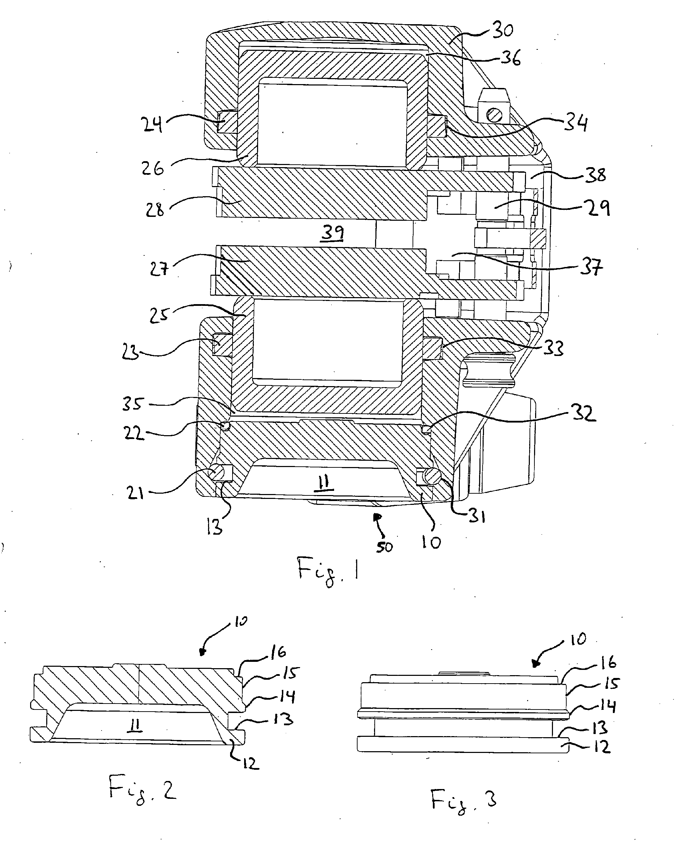

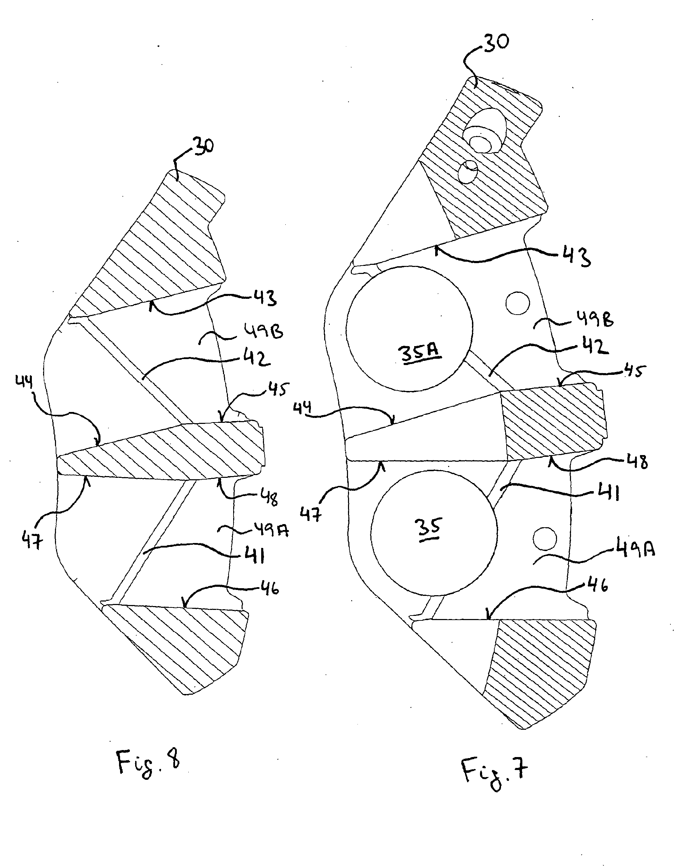

Fig. 1 zeigt einen Schnitt durch ein Gehäuse einer erfindungsgemäßen Bremszange entlang der Linie I-I von Fig. 5. Das Gehäuse 30 weist eine Scheibenraum 39 zur Aufnahme einer nicht dargestellten Bremsscheibe auf. Der Scheibenraum 39 ist Teil eines durch das Gehäuse 30 durchgehenden Schachtes, in dem an den Seitenbereichen 37 und 38 Bremsbeläge 27 und 28 angeordnet sind. Bremsbeläge 27 und 28 werden in den Schacht von der rechten Seite von Fig. 1, d.h. von außen in Richtung der Mitte der nicht dargestellten Bremsscheibe, eingesetzt und mit einem Bolzen 29 gesichert. Das Gehäuse 30 weist zwei Bremszylinder 35 und 36 auf, in denen jeweils ein Bremskolben 25, 26 angeordnet ist. Die Bremskolben 25, 26 sind auf gegenüberliegenden Seiten des Scheibenraums 39 angeordnet und werden auf bekannte Weise mit Druck beim Bremsen beaufschlagt, um die Bremsbeläge 27 und 28 gegen die Bremsscheibe zu drücken. In den Zylinderwandungen sind Nuten 33, 34 vorgesehen, in denen Vierkantdichtungen 23, 24 aufgenommen sind, die den Scheibenraum 39 gegenüber dem Bremszylinder 35 und 36 abdichten und eine Rückstellung der Bremskolben nach dem Bremsen auf bekannte Weise bewirken.

Das Gehäuse der in Fig. 1 dargestellten Bremszange ist ein Schmiedeteil. Die Bremszylinder 35 und 36 werden durch spanende Bearbeitung ausgebildet. Dabei bleibt die in Fig. 1 obere Wandung als Abschlußwand des Zylinders 36 stehen. Der untere Zylinder 35 ist in Folge der spanenden Bearbeitung nach außen offen. Nach dem Einsetzen der Bremskolben 25 und 26 wurde der Bremszylinder 35 durch das Verschlußelement 10 verschlossen. Das Verschlußelement 10 weist eine Nut 13 auf, in der ein Sicherungselement 21 angeordnet ist. Das Gehäuse 30 weist eine Aussparung 31 auf, in die das Sicherungselement 21 zum Teil eingreift. Das Sicherungelement 21 sichert das Verschlußelement 10 in dem Gehäuse 30, insbesondere beim Bremsen, wenn in dem Zylinder 35 ein Druck durch das Bremsfluid aufgebaut wird, der das Verschlußelement 10 in Fig. 1 nach unten drückt. In dem Gehäuse 30 ist desweiteren eine Schulter 32 ausgebildet, an der sich das Verschlußelement 10 über eine Dichtung 22 abstützt. Die Dichtung 22 dichtet den Druckraum des Bremszylinders 35 nach außen ab.

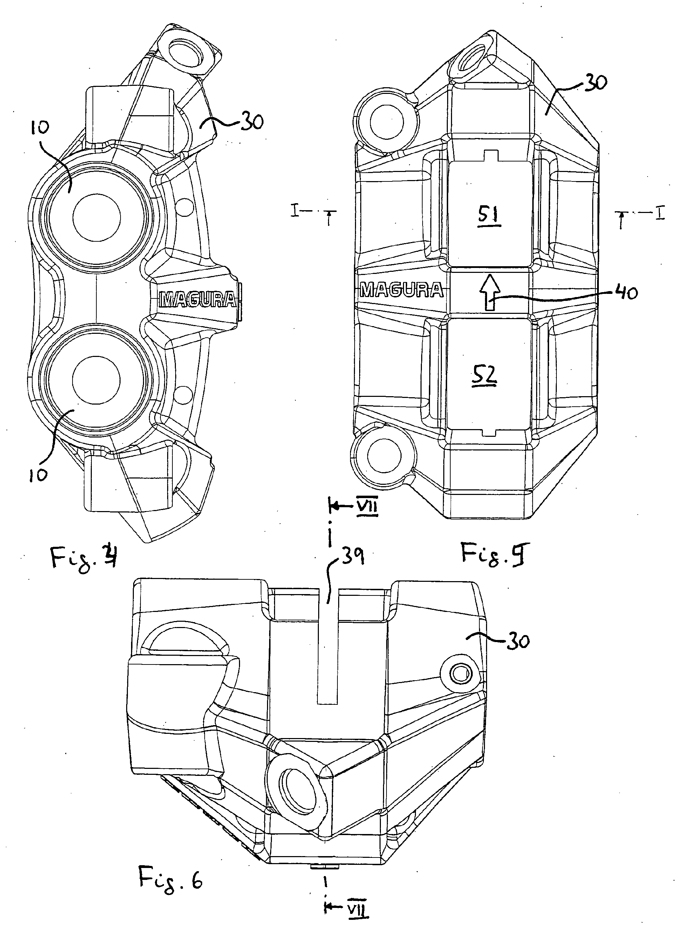

Fig. 2 zeigt eine Schnittansicht entsprechend Fig. 1 von dem Verschlußelement 10. Das Verschlußelement 10 weist eine Aussparung 11 an seiner Außenseite auf. Die Aussparung dient zur Gewichtsreduzierung und kann alternativ auch anders ausgebildet werden oder weggelassen werden. Gegenüber bekannten Verschlußelementen hat sie den Vorteil, daß sie optisch gefälliger aussieht und keine Verwechslungsgefahr wegen der nicht notwendigen Eingriffsabschnitte für Montagewerkzeuge aufweist. Das Verschlußelement 10 weist eine Nut 13 zur Aufnahme des Sicherungselements 21 auf, die zwischen einer Außenwandung 12 und einem Abschnitt 14 ausgebildet ist. Der Außendurchmesser der Außenwandung 12 entspricht dem Innendurchmesser der Öffnung in dem Gehäuse 30, in die das Verschlußelement 10 eingesetzt wird. Daher ist es nicht möglich, von außen das Verschlußelement 10 zu entfernen, weil das Sicherungselement 21 von außen nicht zugänglich ist. Der Abschnitt 14 entspricht dem Außendurchmesser im wesentlichen dem Außendurchmesser der Außenwandung 12. Der Außendurchmesser des Abschnitts 15 ist geringfügig kleiner als der Außendurchmesser des Abschnitts 14. Der Außendurchmesser des Abschnitts 15 entspricht im wesentlichen dem Innendurchmesser der Öffnung in dem Gehäuse 30, an dem das Verschlußelement 10 nach der Montage anliegt. Daher ist es nach der Montage des Verschlußelements 10 auch nicht möglich, das Sicherungselement 21 von innen zu betätigen. Somit kann das Verschlußelement 10 nach erfolgter Montage nicht aus der Bremszange entfernt werden. Da die Kolben 25 und 26 auf eine Betriebsdauer ausgelegt ist, die wesentlich größer als die Betriebsdauer des Fahrzeugs ist, besteht auch kein Bedarf, das Verschlußelement 10 nach erfolgter Montage wieder zu entfernen. Das Verschlußelement 10 weist des weiteren eine Aussparung 16 zur Aufnahme des Dichtungselements 22 auf.

Fig. 3 zeigt eine Seitenansicht des Verschlußelements 10 von Fig. 1. Die Beschreibung von Fig. 3 entspricht im wesentlichen der von Fig. 2 und wird hier nicht wiederholt.

Zur Montage des Verschlußelements 10 wird das Verschlußelement 10 zusammen mit dem Sprengring 21 über eine Trichtervorrichtung in eine Hülse eingebracht, deren Innendurchmesser dem Innendurchmesser der Montageöffnung 50 entspricht. Die Hülse wird auf das Gehäuse 30 gesetzt und das Verschlußelement 10 wird mit dem Sicherungselement 21 in die Montageöffnung 50 geschoben, bis das Verschlußelement 10 gegen die Dichtung 22 stößt. Gleichzeitig gelangt das Sicherungselement 21 in dem Bereich der Aussparung 31. Das Sicherungselement 21 ist ein Sprengring, der vorgespannt ist und in die Aussparung 31 hineinspringt. Die Hälfte des Sicherungselements 21 ist in der Aussparung 31 und die andere Hälfte in der Nut 13 des Sicherungsverschlußelements 10 angeordnet. Durch das Sicherungselement 21 ist das Verschlußelement 10 in der Montageöffnung 50 gesichert.

Fig. 4 zeigt das Gehäuse der erfindungsgemäßen Bremszange von der Seite. Das Gehäuse 30 weist zwei Bremszylinderpaare auf. Man erkennt in Fig. 4 die beiden Verschlußelemente 10.

Fig. 5 zeigt die erfindungsgemäße Bremszange von vorne. Der Pfeil 40 deutet die Rotationsrichtung der Bremsscheibe beim Vorwärtsfahren des Fahrzeugs an. Das Gehäuse 30 weist zwei Schächte 51 und 52 zur Aufnahme nicht dargestellter Bremsbelagpaare auf.

Fig. 6 zeigt eine Ansicht des Gehäuses der erfindungsgemäßen Bremszange von oben.

Fig. 7 zeigt einen Schnitt durch das Gehäuse der erfindungsgemäßen Bremszange entlang der Linie VII-VII von Fig. 6. Das Gehäuse weist zwei Schächte 49A und 49B auf, in denen jeweils ein nicht dargestelltes Bremsbelagpaar aufgenommen ist. Der Schacht 49A weist eine Anlagefläche 47 auf, an der sich der Bremsbelag beim Bremsen des Fahrzeugs abstützt, wenn das vorwärtsfahrende Fahrzeug abgebremst werden soll. Der Schacht 49B weist eine entsprechende Anlagefläche 43 auf. Beim Rückwärtsfahren stützen sich beim Bremsen die nicht dargestellten Bremsbeläge an den Anlageflächen 44 bzw. 46 ab.

Fig. 7 zeigt das Gehäuse 30 in einem Bearbeitungszustand, in dem bereits die Zylinder 35A und 35 in dem Gehäuse 30 ausgebildet sind. Die Trennböden 41 und 42 vom Schmiedeverfahren sind noch nicht entfernt. Der Trennboden 41 hat einen Winkel von 36° bezüglich der Richtung, in dem das eine Schmiedewerkzeug abgezogen wird, d.h. das Schmiedewerkzeug, das in Richtung der Mitte der Bremsscheibe abgezogen wird. Der Trennboden 41 verläuft von dem der Bremsscheibe abgewandten Ende der Anlagefläche 47 bis zu den der Bremsscheibe zugewandten Ende der Anlagefläche 46. Der Trennboden 42 ist spiegelsymmetrisch zu dem Trennboden 41 in dem Schacht 49B ausgebildet. Er verläuft von dem der Bremsscheibe zugewandten Ende der Anlagefläche 43 bis zu dem der Bremsscheibe abgewandten Ende der Anlagefläche 44.

Die Trennböden 41 und 42 werden aus dem Gehäuse auf dem Fachmann bekannte Weise entfernt. Da die Trennböden außerhalb der Anlageflächen 43 und 47 liegen, ist es nicht notwendig, die Anlagenflächen nachzubearbeiten. Durch die schräge Anordnung der Trennböden 41 und 42 ist es möglich, die Anlagenflächen 43 und 47 in verschiedenen Winkeln zueinander anzuordnen und gleichzeitig ein Entformen des Gehäuses 30 nach dem Schmiedevorgang zu ermöglichen. Wegen der schrägen Anordnung der Trennböden 41 und 42 entstehen keine Hinterschneidungen, die den Entformvorgang unmöglich machen würden.

Fig. 8 zeigt eine der Fig. 7 entsprechende Schnittansicht des erfindungsgemäßen Gehäuses der erfindungsgemäßen Bremszange in einem früheren Verarbeitungsschritt unmittelbar nach dem Schmiedevorgang. Verfahrensschritte zur Ausbildung der Bremszylinder und des Scheibenraums sowie der Durchgang für Bolzen und Ansatzstücke sind noch nicht ausgebildet. Im Schnitt werden die durchgehenden Trennböden 41 und 42 gezeigt, die nach dem Schmiedevorgang stehen bleiben. Durch die Ausbildung der in Fig. 7 gezeigten Bremszylinder 35 und 35A werden die Trennböden 42 und 41 zum Teil entfernt. Anschließend werden die restlichen Teile der Trennböden 41 und 42 entfernt. Alternativ könnten auch vor der Ausbildung der Bremszylinder 35 und 35A die Trennböden 41 und 42 komplett entfernt werden.

## Patentansprüche

1. Bremszange für eine Scheibenbremse, insbesondere für Motorräder und/oder Fahrräder, mit einem Gehäuse (30), in dem ein Scheibenraum (39) zur Aufnahme einer Bremsscheibe und ein Bremszylinder (35) zur Aufnahme eines Bremskolbens (25) ausgebildet ist, der mit dem Scheibenraum (39) in Verbindung steht und an seiner dem Scheibenraum (39) gegenüberliegenden Seite eine Montageöffnung (50) aufweist, durch die der Bremskolben (25) in den Bremszylinder (35) einsetzbar ist,
einem Verschlußelement (10) zum Verschließen der Montageöffnung (50) nach dem Einsetzen des Bremskolbens (25) in den Bremszylinder (35), und
einem Sicherungselement (21) zum Sichern des Verschlußelements (10) in der Montageöffnung (50) gegenüber Kräften in Richtung der Hauptachse des Bremszylinders (35),
**dadurch gekennzeichnet, daß** das Gehäuse (30) und das Verschlußelement (10) das Sicherungselement (21) einschließen.

2. Bremszange nach Anspruch 1, **dadurch gekennzeichnet, daß** das Sicherungselement (21) ein Sprengring ist.

3. Bremszange nach einem der vorhergehenden Ansprüche, **dadurch gekennzeichnet, daß** in der Montageöffnung (50) eine Nut (31) zur Aufnahme des Sicherungselements (21) vorgesehen ist.

4. Bremszange nach einem der vorhergehenden Ansprüche, **dadurch gekennzeichnet, daß** das Verschlußelement (10) eine Nut (13) zur Aufnahme des Sicherungselements (21) aufweist.

5. Bremszange nach einem der vorhergehenden Ansprüche, **dadurch gekennzeichnet, daß** in dem Gehäuse (30) im Bereich der Montageöffnung (50) eine Schulter (32) zur Abstützung des Verschlußelements (10) vorgesehen ist.

6. Bremszange nach Anspruch 5, **dadurch gekennzeichnet, daß** zwischen der Schulter (32) und dem Verschlußelement (10) eine Dichtung (22) vorgesehen ist.

7. Bremszange nach einem der vorhergehenden Ansprüche, **dadurch gekennzeichnet, daß** auf der der Montageöffnung (50) gegenüberliegenden Seite des Scheibenraums (39) ein weiterer Bremszylinder (36) zur Aufnahme eines weiteren Bremskolbens (26) vorgesehen ist, der zu dem anderen Bremszylinder (35) koaxial angeordnet ist.

8. Bremszange nach Anspruch 7, **dadurch gekennzeichnet, daß** alle Bremskolben (25, 26) durch die Montageöffnung (50) eingesetzt wurden, bevor die Montageöffnung (50) durch das Verschlußelement (10) verschlossen wurde.

9. Bremszange nach einem der vorhergehenden Ansprüche, **dadurch gekennzeichnet, daß** das Verschlußelement (10) und das Sicherungselement (21) nach der Montage des Verschlußelements (10) in dem Gehäuse (30) nicht mehr entfernbar ist.

10. Bremszange nach einem der vorhergehenden Ansprüche, **dadurch gekennzeichnet, daß** ein weiterer Bremszylinder zur Aufnahme eines weiteren Bremskolben vorgesehen ist, der neben dem anderen Bremszylinder (35) angeordnet ist, wobei ein Verschlußelement und ein Sicherungselement gemäß den Merkmalen von einem der Ansprüche 1 bis 10 vorgesehen ist.

11. Bremszange nach einem der vorhergehenden Ansprüche, **dadurch gekennzeichnet, daß** mehrere Paare (vorzugsweise 2) von Bremszylindern vorgesehen sind, wobei auf einer Seite der Bremszange für jedes Bremszylinderpaar jeweils ein Verschlußelement und Sicherungselement gemäß den Merkmalen von einem der Ansprüche 1 bis 10 vorgesehen ist.

12. Bremszange nach einem der vorhergehenden Ansprüche, **dadurch gekennzeichnet, daß** das Gehäuse (30) ein Schmiedeteil ist.

13. Bremszange für eine Scheibenbremse, insbesondere für Motorräder und/oder Fahrräder, mit einem einteiligen Gehäuse (30), in dem mehrere Schächte (49A, 49B) zur Aufnahme von Bremsbelägen (27, 28) ausgebildet sind, die jeweils zumindest eine Anlagefläche (43, 47) umfassen, an der die Bremsbeläge (27, 28) beim Bremsen des Fahrzeugs zur Aufnahme von Bremskräften anliegen,
**dadurch gekennzeichnet, daß** das Gehäuse (30) ein Schmiedeteil ist.

14. Bremszange nach Anspruch 13 in Kombination mit den Merkmalen nach einem der Ansprüche 1 bis 12.

15. Verfahren zur Herstellung eines Gehäuses (30) einer Bremszange für eine Scheibenbremse, insbesondere für Motorräder und/oder Fahrräder, mit mehreren Schächten (49A, 49B) zur Aufnahme von Bremsbelägen, die jeweils zumindest eine Anlagefläche (43, 47) umfassen, an der die Bremsbeläge (27, 28) beim Bremsen des Fahrzeugs zur Aufnahme von Bremskräften anliegen, mit folgenden Schritten:
a) Ausbilden eines Schmiedewerkzeugpaares, derart, daß die Konturen der beiden Schmiedewerkzeuge die Konturen des herzustellendes Gehäuses (30) definieren, und die beiden Schmiedewerkzeuge Trennböden in den Schächten (49A, 49B) definieren, in denen beim Schmieden Überschußmaterial verbleibt,
b) Einbringen von Material in das erste Schmiedewerkzeug,
c) Schmieden des Materials mit den Schmiedewerkzeugpaar, und
d) Entformen des Gehäuses (30) durch Entfernen des Schmiedewerkzeugpaar,
e) Entfernen des Überschußmaterials der Trennböden,
**dadurch gekennzeichnet, daß** die Trennböden in den Schächten (49A, 49B) schräg zu der Abzugsrichtung zumindest eines der Schmiedewerkzeuge liegen.

16. Verfahren nach Anspruch 15 oder dem Oberbegriff von Anspruch 15, **dadurch gekennzeichnet, daß** die Trennböden außerhalb der Anlageflächen für die Bremsbeläge ausgebildet werden.

17. Verfahren nach Anspruch 15 oder 16, **dadurch gekennzeichnet, daß** die Trennebenen in den Schächten (49A, 49B) in einem Winkel von 1 - 45° gegenüber einer Ebene geneigt sind, die durch einen Normalen-Vektor definiert ist, dessen Richtung der Abzugsrichtung zumindest eines der Schmiedewerkzeuge entspricht.

18. Verfahren nach Anspruch 15 oder 16, **dadurch gekennzeichnet, daß** die Trennebenen in den Schächten (49A, 49B) in einem Winkel von 10 - 40° gegenüber einer Ebene geneigt sind, die durch einen Normalen-Vektor definiert ist, dessen Richtung der Abzugsrichtung zumindest eines der Schmiedewerkzeuge entspricht.

19. Verfahren nach Anspruch 15 oder 16, **dadurch gekennzeichnet, daß** die Trennebenen in den Schächten (49A, 49B) in einem Winkel von 20 - 38° (vorzugsweise ungefähr 36°) gegenüber einer Ebene geneigt sind, die durch einen Normalen-Vektor definiert ist, dessen Richtung der Abzugsrichtung zumindest eines der Schmiedewerkzeuge entspricht.

20. Verfahren nach einem der Ansprüche 15 bis 19, **dadurch gekennzeichnet, daß** das Gehäuse (30) zwei oder drei Schächte (49A, 49B) aufweist.

21. Verfahren nach einem der Ansprüche 15 bis 20, **dadurch gekennzeichnet, daß** in dem Gehäuse nach Schritt d) und vor Schritt e) oder nach Schritt e) Bremszylinder (35, 36) oder Bremszylinderpaare (35, 36) zur Aufnahme von Bremskolben vorzugsweise durch Drehen, Fräsen oder Bohren ausgebildet werden.

22. Verfahren nach einem der Ansprüche 15 bis 21, **dadurch gekennzeichnet, daß** das Gehäuse zur Herstellung einer Bremszange gemäß einem der Ansprüche 1 bis 14 verwendet wird.

23. Gehäuse einer Bremszange nach einem der Ansprüche 1 bis 14, das nach einem der Ansprüche 15 bis 22 hergestellt ist.
